# EUROPÄISCHE PATENTSCHRIFT

(11) **EP 2 687 353 B1**
(45) Veröffentlichungstag und Bekanntmachung des Hinweises auf die Patenterteilung: **28.06.2017**
(21) Anmeldenummer: 12176771.9
(22) Anmeldetag: 17.07.2012
(51) Int. Cl.: B29C 65/02, B32B 3/30, B32B 5/32, B32B 7/04, B32B 37/04, B32B 38/06, B29C 65/20, B29C 65/14, B29K 105/04, B29K 25/00

(54) **Verfahren zur Herstellung von thermoplastischen Schaumstoffplatten durch thermisches Verschweißen von Platten mit strukturierten Vertiefungen**
Method for producing thermoplastic foam plates using thermal welding of plates with structured cavities
Procédé de fabrication de plaques de mousse thermoplastique par soudage thermique de plaques avec des évidements structurés

(43) Veröffentlichungstag der Anmeldung: 22.01.2014
(73) Patentinhaber: BASF SE, 67056 Ludwigshafen am Rhein (DE)
(72) Erfinder: Scherzer, Dietrich, Dr., 67433 Neustadt (DE); Hahn, Klaus, Dr., 67281 Kirchheim (DE); Diehlmann, Tim, 67269 Grünstadt (DE); Licht, Ulrike, Dr., 68309 Mannheim (DE); Sommer, Maria-Kristin, Dr., 67157 Wachenheim (DE); Dietzen, Franz-Josef, Dr., 67454 Haßloch (DE)

(56) Entgegenhaltungen:
- EP-A1- 2 153 982
- FR-A- 1 151 996
- US-A1- 2003 162 000

## Beschreibung

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten. Dabei ist mindestens eine Oberfläche von mindestens einer dünneren thermoplastischen Schaumstoffplatte mit strukturierten Vertiefungen versehen und an den Stellen, an denen die Oberfläche der dünneren thermoplastischen Schaumstoffplatte die strukturierten Vertiefungen aufweist, wird durch das thermische Verschweißen keine Schweißnaht ausgebildet. Weiterhin betrifft die vorliegende Erfindung die thermoplastischen Schaumstoffplatten als solche, die zumindest zweilagig sind. Die Anzahl der Lagen der thermoplastischen Schaumstoffplatte als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatten als solche erhalten, im Fall von vier dünneren thermoplastische Schaumstoffplatten ergibt sich demzufolge eine vierlagige thermoplastische Schaumstoffplatte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

Extrudierte Kunststoffschaumplatten von großer Dicke werden in DE-A 101 063 341 offenbart. Mit dem darin beschriebenen Verfahren zur Verbindung von mindestens zwei Ausgangplatten aus Kunststoffschaum zu einer neuen Platte können Platten mit einer Mindestdicke von 70mm hergestellt werden. Vorzugsweise handelt es sich dabei um Flour-chlor-kohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweise Verschweißung oder stellenweise Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 341 sind jedoch keine Angaben enthalten, wie anstelle einer Verklebung die Verschweißung der Ausgangsplatten konkret durchgeführt werden kann, ebenso wenig ist darin offenbart, dass die Ausgangplatten strukturierte Vertiefungen aufweisen können.

DE-A 44 21 016 offenbart ein Verfahren zur Herstellung von CO₂ geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen kann mit Hilfe eines Heizschwertes durchgeführt werden, wodurch die Oberflächen der eingesetzten Kunststoffschaumplatten angeschmolzen werden. Das Heizschwert kann elektrisch oder mit einem durchfließenden Heizmedium auf die notwendige Schweißtemperatur gebracht werden, die je nach Kunststoffschaum zwischen 100 und 150 °C beträgt. Auch in DE-A 101 063 341 sind keine Angaben enthalten, dass die Ausgangplatten strukturierte Vertiefungen aufweisen können. Ebenso wenig ist darin offenbart, an welchen Stellen bzw. mit welchem Umfang sich zwischen den thermisch verschweißten Ausgangsplatten eine Schweißnaht ausbildet.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist. Auch in WO 2012/016991 sind keine Angaben enthalten, dass die Ausgangplatten strukturierte Vertiefungen aufweisen können und/oder dass infolge des thermischen verschweißen sich an den entsprechenden Stellen keine Schweißnaht ausbilden.

EP-A 2 153 982 betrifft ein flächenförmiges Strukturelement sowie ein Verfahren zu dessen Herstellung. Die flächenförmigen Strukturelemente sind Abschnitte aus einem Schaumstoffblock, der aus Schaumstoffkörpern besteht, die durch flächige Schweißnähte, die von im Abstand zueinander stehenden Ausnehmungen unterbrochen sind, miteinander verbunden sind. Die Schweißnähte dienen nicht nur als Fügestellen, sondern auch als Versteifungs- und Verstärkungsstege und sind daher relativ dick.

FR 1.151.996 betrifft ein Verfahren zur Herstellung von mehrschichtigen Schaumstoffplatten. Dabei wird eine Schaumstoffplatte so zerschnitten, dass die daraus resultierenden dünneren Schaumstoffplatten eine Oberfläche mit strukturierten Vertiefungen aufweisen. Die erhaltenen dünneren Schaumstoffplatten werden anschließend so miteinander verbunden, dass im Bereich der strukturierten Vertiefungen keine Schweißnaht ausgebildet wird. Das in FR 1.151.996 beschriebene Verfahren ist äußerst zeitaufwändig und daher kostenintensiv.

US 2003/0162000 betrifft mehrschichtige viskoelastische Schäume, die aus einzelnen Schichten durch Verschweißen oder Verkleben hergestellt werden. Die Ausgangsplatten der einzelnen Schichten weisen Vertiefungen auf, die auch beim Verschweißen oder Verkleben erhalten bleiben.

Ein grundlegendes Problem beim thermischen Verschweißen ist die Brennbarkeit und das Erfüllen von Brandtests. Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größerer Dicke. Dieses unterschiedliche Brandverhalten ist in der Ausbildung der so genannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "dichteffekt" bezeichnet. Ist hingegen keine Schweißnaht oder nur eine sehr dünne Schweißnaht vorhanden, sind die jeweiligen dünneren Platten nicht fest genug miteinander verbunden, so dass das eigene Produkt nicht stabil ist.

Die der vorliegenden Erfindung zugrunde liegende Aufgabe besteht in der Bereitstellung von neuen zwei- oder mehrlagigen thermoplastischen Schaumstoffplatten als solchen bzw. einem entsprechenden Verfahren zur Herstellung von solchen zumindest zweilagigen thermoplastischen Schaumstoffplatten durch thermisches Verschweißen.

Gelöst wird für die Aufgabe durch ein Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, wobei mindestens eine Oberfläche von mindestens einer dünneren thermoplastischen Schaumstoffplatte mit strukturierten Vertiefungen versehen wird und an den Stellen, an denen die Oberfläche der dünneren thermoplastischen Schaumstoffplatte die strukturierten Vertiefungen aufweist, durch das thermische Verschweißen keine Schweißnaht ausgebildet wird, wobei von den Oberflächen der dünneren thermoplastischen Schaumstoffplatten, die thermisch miteinander verschweißt werden sollen, in einem ersten Verfahrensschritt zunächst die Schäumhaut entfernt wird, worauf in einem zweiten Verfahrensschritt die strukturierten Vertiefungen auf mindestens einer der schäumhautfreien Oberflächen erzeugt werden.

Die mit dem erfindungsgemäßen Verfahren hergestellten zumindest zweilagigen thermoplastischen Schaumstoffplatten zeichnen sich dadurch aus, dass die entsprechende Anzahl an dünneren thermoplastischen Schaumstoffplatten auf sehr stabile Weise zu den zumindest zweilagigen thermoplastischen Schaumstoffplatten (Produkt) zusammengefügt werden können und dass das erhaltene Produkt gleichzeitig einen verbesserten Flammschutz aufweist.

Vorzugsweise bestehen die erfindungsgemäßen zumindest zweilagigen thermoplastischen Schaumstoffplatten (als solche) den Brandtest B2 (gemäß DIN 4102). Dies bedeutet, dass im Rahmen der vorliegenden Erfindung der Dochteffekt, insbesondere beim Brandtest B2, vermieden werden kann, so dass in den erfindungsgemäßen zumindest zweilagigen thermoplastischen Schaumstoffplatten die Schweißnaht der Brandprüfung gemäß Brandtest B2 standhält. Durch ein gezieltes Unterbrechen der Verschweißungsnaht (beispielsweise durch Punkte, Linien oder Gitter) wird somit auch die Brandzone gezielt unterbrochen, so dass der Dochteffekt nicht zustande kommt. Die zumindest zweilagigen thermoplastischen Schaumstoffplatten als solche weisen weiterhin eine hohe Zugfestigkeit auf, vorzugsweise eine Zugfestigkeit von > 0,15 N/mm².

Ein besonders stabiler Zusammenhalt der einzelnen dünneren thermoplastischen Schaumstoffplatten wird dann erzielt, wenn die dünneren thermoplastischen Schaumstoffplatten zusätzlich mit einem Absorber von elektromagnetischer Strahlung versehenen sind, mit elektromagnetischer Strahlung von geeigneter Wellenlänge (beispielsweise IR-Strahlung oder Mikrowellen-Strahlung) bestrahlt werden und/oder auf Temperaturen oberhalb der Glasübergangtemperatur des verwendeten Thermoplasten erhitzt werden. Vorzugsweise werden die einzelnen dünneren thermoplastischen Schaumstoffplatten anschließend zusätzlich miteinander verpresst. Die mit dem erfindungsgemäßen Verfahren hergestellten zumindest zweilagigen thermoplastischen Schaumstoffplatten, insbesondere diejenigen, bei denen die Oberfläche der Schaumstoffplatten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Schaumstoffplatten.

Sofern das erfindungsgemäßes Verfahren unter Verwendung eines Absorbers von elektromagnetischer Strahlung durchgeführt wird, wobei der Absorber auf die entsprechenden Oberflächen der dünneren thermoplastischen Schaumstoffplatten, die miteinander thermisch verschweißt werden, aufgetragen wird, ist ein weiterer Vorteil darin zu sehen, dass die Strahlungsdurchlässigkeit der zumindest zweilagigen thermoplastischen Schaumstoffplatten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Nachfolgend werden die erfindungsgemäß zumindest zweilagigen thermoplastischen Schaumstoffplatten als solche sowie das erfindungsgemäße Herstellungsverfahren dieser Schaumstoffplatten durch thermisches Verschweißen näher definiert.

Die erfindungsgemäße thermoplastische Schaumstoffplatte ist zumindest zweilagig, sie kann also genau zwei Lagen aufweisen oder dreilagig, vierlagig, fünflagig oder noch höher lagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander thermisch verschweißt werden. Die dünnen thermoplastischen Schaumstoffplatten werden auch als Ausgangsplatten bezeichnet. Im Falle einer zweilagigen thermoplastischen Schaumstoffplatte als solche werden also zwei dünnere thermoplastische Schaumstoffplatten miteinander thermisch verschweißt. Bei einer drei- oder vierlagigen thermoplastischen Schaumstoffplatten als solcher werden somit drei bzw. vier dünnere thermoplastische Schaumstoffplatten miteinander thermisch verschweißt. Sofern noch höher lagige thermoplastische Schaumstoffplatten als solche hergestellt werden soll, beispielsweise eine zehnlagige thermoplastische Schaumstoffplatte, müssen demzufolge die der Anzahl der Lagen entsprechende Anzahl an dünneren thermoplastischen Schaumstoffplatten, beispielsweise zehn dünnere thermoplastischen Schaumstoffplatten, miteinander thermisch verschweißt werden. Vorzugsweise ist die erfindungsgemäße thermoplastische Schaumstoffplatte zweilagig, dreilagig oder vierlagig, insbesondere ist die erfindungsgemäße thermoplastische Schaumstoffplatte zweilagig.

Die zum thermischen Verschweißen verwendeten dünneren thermoplastischen Schaumstoffplatten entsprechen hinsichtlich ihrer chemischer Zusammensetzung den im Rahmen des erfindungsgemäße Verfahrens hergestellten zumindest zweilagigen thermoplastischen Schaumstoffplatten als solchen (ohne Berücksichtigung der im Rahmen des Verschweißungsvorganges optional auf die Oberflächen aufgebrachten Komponenten wie Absorber von elektromagnetischer Strahlung oder Bindemittel bzw. ohne Berücksichtigung der infolge der Ausbildung der Schweißnaht an den entsprechenden Oberflächen auftretenden chemischen Veränderungen/Reaktionen). Die jeweils thermisch miteinander zu verschweißenden dünneren thermoplastischen Schaumstoffplatten weisen vorzugsweise dieselbe Dimensionen und/oder dieselbe chemische Zusammensetzung auf. Gegebenenfalls können aber auch thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander thermische verschweißt, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

Die Dimensionierung der thermisch miteinander zu verschweißenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 10 bis 150 mm auf. Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten (Ausgangsplatten). Aufgrund des thermischen Verschweißens werden die jeweils miteinander zu verschweißenden Oberflächen der Ausgangsplatten zumindest etwas auf- oder angeschmolzen (Aufschmelzschritt), was in Abhängigkeit der zugeführten Wärmemenge zu einer gewissen Reduzierung der Dicke der jeweiligen Ausgangsplatte führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit großer Wärmezufuhr durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Die zum thermischen Verschweißen eingesetzten dünneren thermoplastischen Schaumstoffplatten als solche sind dem Fachmann prinzipiell bekannt. Geeignete thermoplastische Schaumstoffplatten sind beispielsweise in EP-A 1 566 490 oder in Form von Blends in WO 2009/047487 offenbart. Beispielsweise können Platten aus amorphen, kristallinen oder teilkristallinen thermoplastischen Schaumstoffen eingesetzt werden.

Vorzugsweise sind die dünneren thermoplastischen Schaumstoffplatten ein Partikelschaumstoff oder ein Extrusionsschaumstoff. Weiterhin ist es bevorzugt, dass die dünneren thermoplastischen Schaumstoffplatten eine Dichte < 200 g/l aufweisen, bevorzugt eine Dichte von < 100 g/l. Ein bevorzugter Partikelschaumstoff ist Styropor^{®}, das kommerziell von der BASF SE erhältlich ist. Mehr bevorzugt sind die dünneren thermoplastischen Schaumstoffplatten ein Extrusionsschaumstoff. Der Extrusionsschaumstoff ist vorzugsweise ein Polystyrol oder aus Styrol hergestelltes Copolymer. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinyl-verbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Erfindungsgemäß ist mindestens eine Oberfläche von mindestens einer dünneren thermoplastischen Schaumstoffplatte mit strukturierten Vertiefungen versehen, wobei mindestens eine dieser Oberflächen, die mit strukturierten Vertiefungen versehen ist, auch thermisch verschweißt wird. Prinzipiell ist es ausreichend, dass im Fall einer zwei- oder mehrlagigen, beispielsweise einer dreilagigen, thermoplastischen Schaumstoffplatte nur eine zu verschweißende Oberfläche einer dünneren thermoplastischen Schaumstoffplatte mit strukturierten Vertiefungen versehen ist. Bei einer dreilagigen thermoplastischen Schaumstoffplatte ist es also denkbar, dass bei einer der drei zu verschweißenden Ausgangsplatten keine Oberfläche mit strukturierten Vertiefungen versehen ist oder dass nur eine Ausgangsplatte (die mittige) an beiden Oberflächen strukturiert ist, die beiden anderen Ausgangsplatten aber unstrukturiert sind. Vorzugsweise ist pro zu verschweißendem Plattenpaar eine zu verschweißende Oberfläche einer dünneren thermoplastischen Schaumstoffplatte mit strukturierten Vertiefungen versehen. Besonders bevorzugt sind pro zu verschweißendem Plattenpaar beide zu verschweißenden Oberflächen der jeweiligen dünneren thermoplastischen Schaumstoffplatte mit strukturierten Vertiefungen versehen.

Sofern im Rahmen der vorliegenden Erfindung Oberflächen von dünneren thermoplastischen Schaumstoffplatten thermisch verschweißt werden, die mit keinen strukturierten Vertiefungen versehen sind, sind die entsprechenden Oberflächen schäumhautfrei. Unter den Begriff "schäumhautfrei" wird im Rahmen der vorliegenden Erfindung verstanden, dass die beim Herstellungsprozess der jeweiligen thermoplastischen Schaumstoffplatte entstandene Schäumhaut beispielsweise durch Hobeln oder Fräsen wieder entfernt wird. Eine solche Schaumstoffplatte weist eine relativ unebene Oberfläche auf, die zahlreiche Vertiefungen oder Vorsprünge enthält. Die entsprechenden Vertiefungen sind jedoch willkürlich über die Oberfläche der entsprechenden thermoplastischen Schaumstoffplatte verteilt, die Vertiefungen weisen also keine Struktur auf. Der Vollständigkeit halber wird darauf hingewiesen, dass bei Verwendung eines Extrusionsschaumstoffes die entsprechende Oberfläche auch als extrusionshautfrei anstelle von schäumhautfrei bezeichnet wird.

Im Rahmen der vorliegenden Erfindung können die auf den zu verschweißenden Oberflächen enthaltenen strukturierten Vertiefungen beliebige Strukturen beziehungsweise Strukturformen annehmen. Vorzugsweise sind die strukturierten Vertiefungen punktförmig, linienförmig oder gitterförmig, besonders bevorzugt gitterförmig. Die strukturierten Vertiefungen können 20 bis 80 %, vorzugsweise 40 bis 60 %, insbesondere 50 %, der jeweiligen Oberfläche einer dünneren thermoplastischen Schaumstoffplatte ausmachen.

Die Strukturen können im Rahmen der vorliegenden Erfindung auch als Muster oder Strukturierungsmuster bezeichnet werden. Eine Struktur ist aus mindestens einer Strukturform, die auch als Struktureinheit bezeichnet werden kann, aufgebaut. Unter einer Struktureinheit (Strukturform) wird im Rahmen der vorliegenden Erfindung die kleinste Einheit in einem Muster (Struktur) verstanden. Eine solche Struktureinheit kann beispielsweise ein Karo, eine Raute, ein Rechteck, ein Quadrat oder eine Linie sein. Gegebenenfalls können solche Struktureinheiten sich abwechseln beziehungsweise miteinander kombiniert werden. So sind Muster denkbar, die aus mehreren verschiedenen Struktureinheiten aufgebaut sind, beispielsweise aus mehreren Linien von unterschiedlicher Stärke (Breite) und/oder Tiefe, die sich beispielsweise mit Rauten oder Quadraten abwechseln. So können auch in einem Gitter unterschiedliche Struktureinheiten enthalten sein, beispielsweise Quadrate von unterschiedlicher Größe, die abwechselnd angeordnet sind.

Die Abstände zwischen den einzelnen Struktureinheiten einer strukturierten Vertiefung auf der jeweiligen Oberfläche der dünneren thermoplastischen Schaumstoffplatte können beliebige Werte (Größen) annehmen, beispielsweise 30 mm. Vorzugsweise beträgt der Abstand zwischen den einzelnen Struktureinheiten der strukturierten Vertiefungen maximal 20 mm (Durchschnittswert über das gesamte Muster), insbesondere beträgt der Abstand 7,5 bis 20 mm. Die Breite einer Struktureinheit (Struktur), beispielsweise der Durchmesser eines Punktes (bei einer punktförmigen Struktur) oder die Breite einer Linie (bei einer linien- oder gitterförmigen Struktur) kann beliebig sein, vorzugsweise ist sie im Bereich von 1 bis 25 mm, mehr bevorzugt 5 bis 20 mm, insbesondere 10 bis 15 mm.

Ebenso können die Vertiefungen als solche (also die Tiefe einer Strukturierung) beliebige Werte (Größen) annehmen. So ist es denkbar, dass in Teilbereichen einer Oberfläche die gleichen Struktureinheiten/Muster enthalten sind, die sich jedoch hinsichtlich ihrer Tiefe unterscheiden. Die Vertiefungen sind (als Durchschnittswert) in aller Regel nicht größer (tiefer) als 25 % der entsprechenden Plattendicke, wobei dieser Wert bei sehr dünnen thermoplastischen Schaumstoffplatten (beispielsweise mit einer Dicke von weniger als 10 mm) auch etwas höher ausfallen kann. Hat eine dünne thermoplastischen Schaumstoffplatte beispielsweise eine Dicke von 100 mm, so haben die Vertiefungen (im Durchschnitt) vorzugsweise eine Tiefe von maximal 20 mm. Bevorzugt weisen die strukturierten Vertiefungen im Durchschnitt eine Tiefe von nicht größer als 10 mm auf, besonders bevorzugt eine Tiefe von nicht größer als 5 mm (jeweils bezogen auf die Teile der Oberfläche der entsprechenden dünneren thermoplastischen Schaumstoffplatte, die keine Vertiefungen aufweisen). Die Mindesttiefe einer strukturierten Vertiefung im Rahmen der vorliegenden Erfindung beträgt 0,5 mm, bevorzugt 1 mm, besonders bevorzugt 2 mm (als Durchschnittswerte jeweils bezogen auf die Teile der Oberfläche der entsprechenden dünneren thermoplastischen Schaumstoffplatte, die keine Vertiefungen aufweisen).

Die strukturierten Vertiefungen können auf der entsprechenden Oberfläche einer dünneren thermoplastischen Schaumstoffplatte nach beliebigen, dem Fachmann bekannten Methoden erzeugt werden. Vorzugsweise werden die strukturierten Vertiefungen durch Hobeln oder Fräsen, insbesondere durch Fräsen, der Oberfläche der dünneren thermoplastischen Schaumstoffplatten erzeugt. Die strukturierten Vertiefungen werden auf einer Oberfläche (der Ausgangsplatte) erzeugt, die schäumhautfrei ist. Das Hobeln oder Fräsen zur Erzeugung einer Oberfläche mit strukturierten Vertiefungen unterscheidet sich von dem vorstehend beschriebenen Hobeln oder Fräsen zur Erzeugung einer schäumhautfreien Oberfläche insbesondere dahingehend, dass im Fall der Erzeugung einer Oberfläche mit strukturierten Vertiefungen das Hobeln oder Fräsen an ausgesuchten Stellen/Teilbereichen der entsprechenden Oberfläche unter Erzeugung der gewünschten Struktureinheit/Muster gezielt durchgeführt wird. Alternativ können die strukturierten Vertiefungen auf der entsprechenden Oberfläche auch in situ während des thermischen Verschweißens beispielsweise unter Verwendung von Vorrichtungen, die Noppen oder Rillen aufweisen, erzeugt werden (siehe auch nachfolgenden Text).

Im Rahmen der vorliegenden Erfindung wird von den Oberflächen der dünneren thermoplastischen Schaumstoffplatten (Ausgangsplatten), die thermisch miteinander verschweißt werden sollen, in einem ersten Verfahrensschritt zunächst die Schäumhaut, vorzugsweise durch Fräsen, entfernt, worauf in einem zweiten Verfahrensschritt die strukturierten Vertiefungen, vorzugsweise durch Fräsen, auf mindestens einer der schäumhautfreien Oberflächen erzeugt werden. Die Erzeugung der strukturierten Vertiefungen kann wiederum in mehrere Schritte unterteilt werden.

In einer bevorzugten Ausführungsform der vorliegenden Erfindung weisen die beiden thermisch zu verschweißenden Oberflächen identische oder zu mindestens 80 % übereinstimmende Strukturierungsmuster (Muster oder Struktur) auf. Vorzugsweise weisen die beiden thermisch zu verschweißenden Oberflächen identische Strukturierungsmuster auf. Weiterhin ist es bevorzugt, dass die thermisch zu verschweißenden Oberflächen vor dem Verschweißen so übereinandergelegt werden, dass möglichst viele der strukturierten Vertiefungen auf beiden thermisch zu verschweißenden Oberflächen miteinander zur Deckung kommen. Besonders bevorzugt werden zwei Oberflächen mit identischen Strukturierungsmuster thermisch miteinander verschweißt, wobei die thermisch zu verschweißenden Oberflächen vor dem Verschweißen so übereinandergelegt werden, dass die strukturierten Vertiefungen auf beiden thermisch zu verschweißenden Oberflächen vollständig miteinander zur Deckung kommen.

Die Durchführung des thermischen Verschweißens als solchem ist dem Fachmann bekannt. Der Effekt des thermischen Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das thermische Verschweißen mit einer Vorrichtung ausgewählt aus einem Heizschwert, einem Heizgitter oder einer Heizplatte durchgeführt wird, wobei die Vorrichtung gegebenenfalls mit Noppen oder Rillen versehen sein kann. Beispielsweise kann das thermische Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum thermischen Verschweißen Noppen oder Rillen aufweist, können auf diese Weise die strukturierten Vertiefungen auf die entsprechende Oberfläche der thermisch zu verschweißenden dünneren thermoplastischen Schaumstoffplatten aufgebracht werden. Anstelle der Verwendung einer Vorrichtung wie eines Heizschwerts oder eines Heizgitters ist es im Rahmen der vorliegenden Erfindung auch möglich, dass das thermische Verschweißen, also die Wärmezufuhr, unter Verwendung von elektromagnetischer Strahlung teilweise oder vollständig durchgeführt wird (siehe auch weiter unten im Text). Ebenso ist es denkbar, dass im Anschluss an das thermische Verschweißen mittels eines Heizschwerts oder eines Heizgitters ein zusätzlicher Verschweißschritt unter Verwendung von elektromagnetischer Strahlung nachgeschaltet ist.

Durch das thermische Verschweißen bildet sich zwischen den zu verschweißenden Oberflächen eine Schweißnaht aus. Anstelle des Begriffs "Schweißnaht" können auch die Begriffe "Schweißhaut" oder "Schweißzone" verwendet werden. Beim thermischen Verschweißen wird im Rahmen der vorliegenden Erfindung an den Stellen, an denen die Oberfläche der dünneren thermoplastischen Schaumstoffplatte die strukturierten Vertiefungen aufweist, keine Schweißnaht ausgebildet. An den Stellen, wo sich eine Schweißnaht ausbildet, kann die Schweißnaht eine beliebige Dicke annehmen, vorzugsweise beträgt sie zwischen 20 und 350 µm (Durchschnittswert verteilt über mindestens fünf Messpunkte, die durch Lichtmikroskopie bestimmt werden), mehr bevorzugt zwischen 50 und 200 µm, insbesondere zwischen 80 und 130 µm.

Vorzugsweise erfolgt der Verschweißungsvorgang über einen Zeitraum von maximal 10 Sekunden (bezogen auf die jeweiligen Stellen einer Oberfläche, auf die Energie zugeführt wird).

Da sich im Rahmen der vorliegenden Erfindung beim thermischen Verschweißen an den Stellen, an denen die Oberfläche der dünneren thermoplastischen Schaumstoffplatte die strukturierten Vertiefungen aufweist, keine Schweißnaht ausbildet, bedeutet dies, dass die auf den eingesetzten dünneren thermoplastischen Schaumstoffplatten enthaltenen strukturierten Vertiefungen auch nach dem thermischen Verschweißen erhalten bleiben und somit im Verfahrensprodukt (den zumindest zweilagigen thermoplastischen Schaumstoffplatten als solchen) ebenfalls vollständig oder zumindest weitgehend, vorzugsweise vollständig enthalten sind.

Im Rahmen der vorliegenden Erfindung sind normalerweise 20 bis 80 %, vorzugsweise 40 bis 60 %, insbesondere 50 %, der jeweiligen Oberfläche der dünneren thermoplastischen Schaumstoffplatte nach dem thermischen Verschweißen mit einer Schweißnaht versehen.

Das thermische Verschweißen wird erfindungsgemäß bei Temperaturen von 150°C bis 400 °C durchgeführt, wobei vorzugsweise auf Temperaturen oberhalb der Glasübergangstemperatur und/oder Schmelztemperatur der thermoplastischen Schaumstoffplatte erhitzt wird. Vorzugsweise wird das thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt.

In einer Ausführungsform der vorliegenden Erfindung erfolgt das thermische Verschweißen in Gegenwart von mindestens einem Absorber von elektromagnetischer Strahlung (im nachfolgenden Text auch als "Absorber" bezeichnet). Hierzu wird mindestens ein Absorber auf mindestens eine Oberfläche von mindestens einer dünneren thermoplastischen Schaumstoffplatte aufgetragen. Sofern der Absorber im Rahmen der vorliegenden Erfindung auf eine Oberfläche mit strukturierten Vertiefungen aufgetragen wird, erfolgt das Auftragen so, dass der Absorber nicht auf den vertieften Teil (also nicht in die Vertiefungen) der entsprechenden Oberfläche aufgetragen wird. So ist es denkbar, dass beim thermischen Verschweißen von zwei dünneren thermoplastischen Schaumstoffplatten nur auf eine der beiden thermisch zu verschweißenden Oberflächen ein Absorber aufgetragen wird, dies kann beispielsweise auch auf einer Oberfläche erfolgen, die keine Vertiefungen aufweist.

Vorzugsweise wird pro zu verschweißendem Plattenpaar auf nur eine thermisch zu verschweißende Oberfläche der dünneren thermoplastischen Schaumstoffplatten mindestens ein Absorber von elektromagnetischer Strahlung aufgetragen.

Vorzugsweise wird dabei der Absorber auf eine Oberfläche von mindestens einer der dünneren thermoplastischen Schaumstoffplatten mit strukturierten Vertiefungen aufgetragen, insbesondere wird der Absorber nicht auf den vertieften Teil der entsprechenden Oberfläche aufgetragen. Verfahren zum Auftragen des Absorbers von elektromagnetischer Strahlung sind dem Fachmann bekannt, beispielsweise kann der Absorber großflächig auf die entsprechende Oberfläche der dünneren thermoplastischen Schaumstoffplatte aufgetragen werden. Vorzugsweise wird der Absorber von elektromagnetischer Strahlung als Dispersion eingesetzt, insbesondere als wässrige Dispersion. Das Auftragen auf die Plattenoberfläche kann beispielsweise durch Pinseln, Rakeln, Walzen, Sprühen oder Drucken erfolgen.

Die Menge an Absorber (fest) auf einer Oberfläche beträgt normalerweise 0,01 g/m² bis 100 g/m², bevorzugt 0,1g/m² bis 50 g/m². Besonders bevorzugt 1 g/m² bis 20 g/m². Die Absorber können einseitig oder beidseitig aufgetragen werden.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere lonomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellen-Strahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellen-Absorber.

Unter IR-Absorber ist im Rahmen dieser Anmeldung eine Verbindung zu verstehen, die aufgebracht in einer Schichtdicke von ≤ 50 µm bei mindestens einer Wellenlänge von Strahlung des Wellenlängenbereichs von 700 nm bis 1000 µm eine Absorption ≥ 90 % zeigt. Bevorzugt ist der Wellenlängenbereich von > 1 µm bis 20 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellen Absorber, insbesondere Graphit oder Ruß. Weiterhin ist es bevorzugt, dass die elektromagnetische Strahlung IR-Strahlen und/oder Mikrowellen-Strahlen sind.

Sofern im Rahmen der vorliegenden Erfindung auf mindestens eine Oberfläche von mindestens einer dünneren thermoplastischen Schaumstoffplatte mindestens ein Absorber von elektromagnetischer Strahlung aufgetragen wird, erfolgt vorzugsweise das thermische Verschweißen teilweise oder vollständig unter Verwendung von elektromagnetischer Strahlung. Der Fachmann kennt die hierfür erforderlichen Geräte zur Erzeugung der geeigneten elektromagnetischen Strahlung. Beispielsweise kann eine beschichtete Platte im Sekunden- bis Minutenbereich in einem Mikrowellenofen oder mit einem IR-Strahler bestrahlt werden.

In einer bevorzugten Ausführungsform der vorliegenden Erfindung wird auf mindestens eine Oberfläche von mindestens einer dünneren thermoplastischen Schaumstoffplatte mindestens ein Absorber von elektromagnetischer Strahlung aufgetragen, wobei mindestens eine dünnere thermoplastische Schaumstoffplatte, auf die der Absorber von elektromagnetischer Strahlung aufgetragen wurde, mit elektromagnetischer Strahlung bestrahlt wird. Vorzugsweise wird dabei der Absorber nicht auf den vertieften Teil (also nicht in die Vertiefungen) der entsprechenden Oberfläche aufgetragen.

Wie vorstehend bereits erwähnt, können außer dem Absorber von elektromagnetischer Strahlung auch weitere Stoffe mit anderen Verwendungseigenschaften gemeinsam mit dem Absorber auf die zu verschweißende Oberfläche der entsprechenden dünneren thermoplastischen Schaumstoffplatten aufgetragen werden. Geeignete weitere Stoffe können beispielsweise Bindemittel, Flammschutzmittel, pH-Regulatoren sowie gegebenenfalls Lösungsmittel sein. Bindemittel, Flammschutzmittel, pH-Regulatoren sowie Lösungsmittel als solche sind dem Fachmann bekannt.

In einer Ausführungsform der vorliegenden Erfindung wird auf mindestens einer Oberfläche von mindestens einer dünneren thermoplastischen Schaumstoffplatte ein Gemisch aufgetragen wird, das i) mindestens einen Absorber von elektromagnetischer Strahlung, ii) mindestens ein Bindemittel und/oder iii) mindestens ein Flammschutzmittel enthält.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilagigen thermoplastischen Schaumstoffplatten (Verbundplatten) aufgrund der Verwendung des besagten Bindemittels noch weniger von den Ausgangsplatten abweichen.

In einer Ausführungsform der vorliegenden Erfindung enthalten die erfindungsgemäßen thermoplastischen Schaumstoffplatten mindestens ein Flammschutzmittel. Flammschutzmittel als solche sind dem Fachmann bekannt. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung. Die vorgenannten Flammschutzmittel, vorzugsweise die phosphorhaltigen Flammschutzmittel, aber nicht die halogenierten organischen Verbindungen, werden vorzugsweise vor dem thermischen Verschweißen direkt auf mindestens eine Oberfläche (pro Plattenpaar) der zu verschweißenden Ausgangsplatten aufgetragen.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlor-isopropyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbindungen, besonders bevorzugt sind HBCD (Hexabromcyclododekan) oder bromierte Polystyrole. Bromierte Polystyrole sind kommerziell erhältlich, beispielsweise von Emerald, Fa. Great Lakes. Sie werden vorzugsweise in Mengen von 0,5 bis 5 Gew.-% (bezogen auf die Ausgangsplatte) eingesetzt. Sofern halogenierte organische Verbindungen als Flammschutzmittel eingesetzt werden, erfolgt dies vorzugsweise bereits während des Herstellungsprozesses der Ausgangsplatten, das heißt, das Flammschutzmittel ist gleichmäßig über die gesamte Dicke der jeweiligen Ausgangsplatte verteilt.

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess. In einer Ausführungsform der vorliegenden Erfindung ist Blähgraphit bevorzugt, der ebenfalls als Absorber verwendet werden kann.

Weiterhin ist es bevorzugt, dass in erfindungsgemäßen Verfahren ein Verpressen der thermisch zu verschweißenden zusammengefügten dünnen thermoplastischen Schaumstoffplatten durchgeführt wird. Das Verpressen erfolgt im Allgemeinen im Sekunden- bis Minutenbereich und/oder bei einem Pressdruck von 0,1 bis 0,5 bar. Das Verpressen erfolgt erfindungsgemäß vorzugsweise nach dem thermischen Verschweißen. Sofern im Rahmen der vorliegenden Findung das thermische Verschweißen nur mittels Bestrahlung mit elektromagnetischer Strahlung durchgeführt wird, kann das Verpressen auch vor dem thermischen Verschweißen durchgeführt werden.

Gegebenenfalls kann im erfindungsgemäßen Verfahren ein Trocknungsschritt durchgeführt werden, beispielsweise nachdem ein Absorber von elektromagnetischer Strahlung auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100°C statt.

Ein weiterer Gegenstand der vorliegenden Erfindung sind die thermoplastischen Schaumstoffplatten als solche, die zumindest zweilagig sind und nach dem vorstehend beschriebenen Verfahren herstellbar sind.

Nachfolgend wird die Erfindung anhand von Beispielen verdeutlicht.

Die Versuche werden mit Styropor®3035 CS (Handelsprodukt der BASF SE/Ausgangsplatten) durchgeführt, die eine Dicke von 50 mm und eine Dichte von etwa 30 g/l aufweisen. Die Verschweißungstemperatur beträgt 180 °C, die Verschweißungszeit 5 Sekunden, der Anpressdruck liegt bei 0,01 N/mm². Die Versuche werden mit einer handelsüblichen Spiegelschweißanlage der Firma Wegener GmbH, Typ SMS 203, durchgeführt. Die in der nachstehenden Tabelle 1 für die jeweiligen Ausgangsplatten (Platten 1 oder 2) aufgeführten strukturierten Vertiefungen wurden durch Fräsen erzeugt, nachdem den entsprechenden Platten zunächst ebenfalls durch Fräsen die Schäumhaut entfernt wurde.

**Tabelle 1:**

| **Beispiel** | **Platte 1** | **Platte 2** | **Mittlerer Abstand/Breite Fräszone (mm/mm)** | **Zugfestigkeit (N/mm²)** | **B2-Test bestanden** | **Dicke Verschweißungsnaht µm)** |
|---|---|---|---|---|---|---|
| 1 (Vgl) | ungefräst | ungefräst | | 0.31 | nein | 350 |
| 2 (Vgl) | gefräst | gefräst | | 0.26 | nein | 300 |
| 3 (Vgl) | ungefräst | gefräst | | 0.27 | nein | 300 |
| 4 | karo 2 mm | gefräst | 10/10 | 0.28 | ja | 130 |
| 5 | karo 4 mm | gefräst | 10/10 | 0.28 | ja | 150 |
| 6 | karo 6 mm | gefräst | 10/10 | 0.27 | ja | 140 |
| 7 | diagonal 2 mm | gefräst | 15/15 | 0.30 | ja | 120 |
| 8 | diagonal 4 mm | gefräst | 15/15 | 0.26 | ja | 150 |
| 8 | diagonal 6 mm | gefräst | 15/15 | 0.22 | ja | 120 |
| 10 | diagonal 2 mm | diagonal 2 mm | 15/15 | 0.24 | ja | 130 |
| 11 | diagonal 3 mm | diagonal 3 mm | 15/15 | 0.29 | ja | 140 |
| 12 | diagonal 5 mm | diagonal 5 mm | 15/15 | 0.26 | ja | 120 |

| | | | | | | |
|---|---|---|---|---|---|---|
| Vgl = Vergleichsbeispiel Ungefräst: Ausgangsplatte wird mit Schäumhaut thermisch verschweißt Gefräst: Schäumhaut wurde vor dem thermischen Verschweißen entfernt Millimeterangabe in Spalten 2 und 3: Frästiefe der strukturierten Vertiefungen (Frässtrukturen) Spalte 4: Abstand und Breite der Frässtrukturen Spalte 7: Durchschnittliche Dicke der Verschweißungsnaht an den Stellen ohne strukturierte Vertiefungen; an den Stellen mit strukturierter Vertiefung ist keine Schweißnaht ausgebildet. Mit einem digitalen Aufsichtsmikroskop (Firma Scope Eye) wird bei 60-facher Vergrößerung die Schweißnaht neben einem aufgelegten Maßstab mit 50 µm Graduierung gemessen. Die Messungen werden gleichmäßig über einen Querschnitt der Verschweißungsnaht verteilt. Es wird der Mittelwert aus fünf Messungen gebildet. | | | | | | |

Die erfindungsgemäßen zweilagigen thermoplastischen Schaumstoffplatten erreichen eine Zugfestigkeit (Haftzugfestigkeit analog DIN EN 1607) von mindesten 0,15 N/mm² (Durchschnittswert aus drei Versuchen) und erfüllen den Brandtest B2 (gemäß DIN 4102).

## Patentansprüche

1. Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, wobei mindestens eine Oberfläche von mindestens einer dünneren thermoplastischen Schaumstoffplatte mit strukturierten Vertiefungen versehen wird und an den Stellen, an denen die Oberfläche der dünneren thermoplastischen Schaumstoffplatte die strukturierten Vertiefungen aufweist, durch das thermische Verschweißen keine Schweißnaht ausgebildet wird, **dadurch gekennzeichnet, dass** von den Oberflächen der dünneren thermoplastischen Schaumstoffplatten, die thermisch miteinander verschweißt werden sollen, in einem ersten Verfahrensschritt zunächst die Schäumhaut entfernt wird, worauf in einem zweiten Verfahrensschritt die strukturierten Vertiefungen auf mindestens einer der schäumhautfreien Oberflächen erzeugt werden.

2. Verfahren gemäß Anspruch 1, **dadurch gekennzeichnet, dass** die strukturierten Vertiefungen punktförmig, linienförmig oder gitterförmig, vorzugsweise gitterförmig, sind.

3. Verfahren gemäß Anspruch 1 oder 2, **dadurch gekennzeichnet, dass** der Abstand zwischen den einzelnen Struktureinheiten der strukturierten Vertiefungen maximal 20 mm ist.

4. Verfahren gemäß einem der Ansprüche 1 bis 3, **dadurch gekennzeichnet, dass** die strukturierten Vertiefungen im Durchschnitt eine Tiefe von nicht größer als 10 mm und nicht kleiner als 0,5 mm aufweisen.

5. Verfahren gemäß einem der Ansprüche 1 bis 4, **dadurch gekennzeichnet, dass** die strukturierten Vertiefungen durch Hobeln oder Fräsen, vorzugsweise durch Fräsen, der Oberfläche der dünneren thermoplastischen Schaumstoffplatten erzeugt werden.

6. Verfahren gemäß einem der Ansprüche 1 bis 5, **dadurch gekennzeichnet, dass** 20 bis 80 %, vorzugsweise 40 bis 60 %, der jeweiligen Oberfläche der dünneren thermoplastischen Schaumstoffplatte nach dem thermischen Verschweißen mit einer Schweißnaht versehen sind.

7. Verfahren gemäß einem der Ansprüche 1 bis 6, **dadurch gekennzeichnet, dass** die dünnere thermoplastische Schaumstoffplatte ein Partikelschaumstoff oder ein Extrusionsschaumstoff ist, vorzugsweise ein Extrusionsschaumstoff von Polystyrol oder von einem aus Styrol hergestellten Copolymer.

8. Verfahren gemäß einem der Ansprüche 1 bis 7, **dadurch gekennzeichnet, dass** pro zu verschweißendem Plattenpaar beide thermisch zu verschweißenden Oberflächen mit strukturierten Vertiefungen versehen werden.

9. Verfahren gemäß Anspruch 8, **dadurch gekennzeichnet, dass** die beiden thermisch zu verschweißenden Oberflächen identische oder zu mindestens 80 % übereinstimmende Strukturierungsmuster aufweisen, wobei vorzugsweise die thermisch zu verschweißenden Oberflächen vor dem Verschweißen so übereinandergelegt werden, dass möglichst viele der strukturierten Vertiefungen auf beiden thermisch zu verschweißenden Oberflächen miteinander zur Deckung kommen.

10. Verfahren gemäß einem der Ansprüche 1 bis 9, **dadurch gekennzeichnet, dass** das thermische Verschweißen mit einer Vorrichtung ausgewählt aus einem Heizschwert, einem Heizgitter oder einer Heizplatte durchgeführt wird, wobei die Vorrichtung gegebenenfalls mit Noppen oder Rillen versehen sein kann.

11. Verfahren gemäß einem der Ansprüche 1 bis 10, **dadurch gekennzeichnet, dass** auf mindestens eine Oberfläche von mindestens einer dünneren thermoplastischen Schaumstoffplatte mindestens ein Absorber von elektromagnetischer Strahlung aufgetragen wird, wobei mindestens eine dünnere thermoplastische Schaumstoffplatte, auf die der Absorber von elektromagnetischer Strahlung aufgetragen wurde, mit elektromagnetischer Strahlung bestrahlt wird.

12. Verfahren gemäß einem der Ansprüche 1 bis 11, **dadurch gekennzeichnet, dass** das thermische Verschweißen bei Temperaturen von 50 bis 300 °C oberhalb der Glasübergangstemperatur bei amorphen thermoplastischen Schaumstoffen oder von 50 bis 100°C oberhalb der Schmelztemperatur bei teilkristallinen thermoplastischen Schaumstoffen durchgeführt wird.

13. Verfahren gemäß einem der Ansprüche 1 bis 12, **dadurch gekennzeichnet, dass** nach dem thermischen Verschweißen ein Verpressen der zumindest zweilagigen thermoplastischen Schaumstoffplatten durchgeführt wird, vorzugsweise erfolgt das Verpressen mit einem Pressdruck von 0,1 bis 0,5 bar.

14. Verfahren gemäß einem der Ansprüche 1 bis 13, **dadurch gekennzeichnet, dass** von den Oberflächen der dünneren thermoplastischen Schaumstoffplatten, die thermisch miteinander verschweißt werden sollen, in einem ersten Verfahrensschritt zunächst die Schäumhaut durch Fräsen entfernt wird, worauf in einem zweiten Verfahrensschritt die strukturierten Vertiefungen durch Fräsen auf mindestens einer der schäumhautfreien Oberflächen erzeugt werden.

15. Thermoplastische Schaumstoffplatte, die zumindest zweilagig ist, herstellbar nach einem Verfahren gemäß einem der Ansprüche 1 bis 13.

## Claims

1. A method of producing at least two-ply thermoplastic sheets of foam by forming the at least two-ply thermoplastic sheet of foam by thermally welding together two or more thinner thermoplastic sheets of foam, wherein at least one surface of at least one thinner thermoplastic sheet of foam is provided structured recesses and the areas where the surface of the thinner thermoplastic sheet of foam displays the structured recesses do not develop a weld seam due to being thermally welded together, which method comprises a first step of initially removing the foam skin from the surfaces of the thinner thermoplastic sheets of foam which are to be welded together thermally and then a second step of creating the structured recesses on at least one of the surfaces freed of the foam skin.

2. The method according to claim 1 wherein the structured recesses are point shaped, line shaped or grid shaped, preferably grid shaped.

3. The method according to claim 1 or 2 wherein the separation between the individual structural units of the structured recesses is not more than 20 mm.

4. The method according to any one of claims 1 to 3 wherein the structured recesses are on average not more than 10 mm and not less than 0.5 mm deep.

5. The method according to any one of claims 1 to 4 wherein the structured recesses are created by planing or milling, preferably by milling, the surface of the thinner thermoplastic sheets of foam.

6. The method according to any one of claims 1 to 5 wherein 20 to 80%, preferably 40 to 60% of the particular surface of the thinner thermoplastic sheet of foam has a weld seam after being welded together thermally.

7. The method according to any one of claims 1 to 6 wherein the thinner thermoplastic sheet of film is a bead foam or an extruded foam, preferably an extruded foam of polystyrene or of a styrene copolymer.

8. The method according to any one of claims 1 to 7 wherein a pair of sheets to be welded together has both the surfaces to be welded together thermally provided structured recesses.

9. The method according to claim 8 wherein both the surfaces to be welded together thermally display identical or at least 80% concurring patterns of structurization, wherein, preferably, the surfaces to be welded together thermally are placed on top of each other before welding so as to maximize the degree of congruence between the structured recesses on the two surfaces to be welded together thermally.

10. The method according to any one of claims 1 to 9 wherein the step of thermal welding is carried out with an apparatus selected from a heating lance, a heating grid or a heating platen, wherein the apparatus may optionally have dimples or grooves.

11. The method according to any one of claims 1 to 10 wherein at least one absorber of electromagnetic radiation is applied to at least one surface of at least one thinner thermoplastic sheet of foam, wherein at least one thinner thermoplastic sheet of foam whereto the absorber of electromagnetic radiation was applied is irradiated with electromagnetic radiation.

12. The method according to any one of claims 1 to 11 wherein the step of thermal welding is carried out at temperatures in the range from 50 to 300°C above the glass transition temperature in the case of amorphous thermoplastic foams or in the range from 50 to 100°C above the melting temperature in the case of partly crystalline thermoplastic foams.

13. The method according to any one of claims 1 to 12 wherein a step of compressing the at least two-ply thermoplastic sheets of foam is carried out after the step of thermal welding, the compressing step preferably being effected using a molding pressure of 0.1 to 0.5 bar.

14. The method according to any one of claims 1 to 13 which method comprises a first step of initially removing by milling the foam skin from the surfaces of the thinner thermoplastic sheets of foam which are to be welded together thermally and then a second step of creating by milling the structured recesses on at least one of the surfaces freed of the foam skin.

15. A thermoplastic sheet of foam that is at least two-ply, obtainable by a method according to any one of claims 1 to 13.

## Revendications

1. Procédé de fabrication de plaques de mousse thermoplastique au moins bicouches par soudage thermique d'au moins deux plaques de mousse thermoplastique plus minces en la plaque de mousse thermoplastique au moins bicouche, au moins une surface d'au moins une plaque de mousse thermoplastique plus mince étant munie d'évidements structurés, et aucun joint de soudure n'étant formé par le soudage thermique aux emplacements auxquels la surface de la plaque de mousse thermoplastique plus mince comprend les évidements structurés, **caractérisé en ce que** la peau de mousse des surfaces des plaques de mousse thermoplastique plus minces qui doivent être soudées thermiquement l'une avec l'autre est tout d'abord éliminée lors d'une première étape de procédé, les évidements structurés étant formés lors d'une deuxième étape de procédé sur au moins une des surfaces exemptes de peau de mousse.

2. Procédé selon la revendication 1, **caractérisé en ce que** les évidements structurés sont sous forme ponctuelle, linéaire ou en treillis, de préférence en treillis.

3. Procédé selon la revendication 1 ou 2, **caractérisé en ce que** la distance entre les unités structurales individuelles des évidements structurés est d'au plus 20 mm.

4. Procédé selon l'une quelconque des revendications 1 à 3, **caractérisé en ce que** les évidements structurés présentent en moyenne une profondeur non supérieure à 10 mm et non inférieure à 0,5 mm.

5. Procédé selon l'une quelconque des revendications 1 à 4, **caractérisé en ce que** les évidements structurés sont formés par rabotage ou fraisage, de préférence par fraisage, de la surface des plaques de mousse thermoplastique plus minces.

6. Procédé selon l'une quelconque des revendications 1 à 5, **caractérisé en ce que** 20 à 80 %, de préférence 40 à 60 %, de la surface de chacune des plaques de mousse thermoplastique plus minces est munie d'un joint de soudure après le soudage thermique.

7. Procédé selon l'une quelconque des revendications 1 à 6, **caractérisé en ce que** la plaque de mousse thermoplastique plus mince est une mousse particulaire ou une mousse extrudée, de préférence une mousse extrudée de polystyrène ou d'un copolymère fabriqué à partir de styrène.

8. Procédé selon l'une quelconque des revendications 1 à 7, **caractérisé en ce que**, par paire de plaques à souder, les deux surfaces à souder thermiquement sont munies d'évidements structurés.

9. Procédé selon la revendication 8, **caractérisé en ce que** les deux surfaces à souder thermiquement présentent un motif de structuration identique ou concordant à au moins 80 %, les surfaces à souder thermiquement étant de préférence superposées avant le soudage de sorte qu'autant que possible des évidements structurés des deux surfaces à souder thermiquement se recouvrent.

10. Procédé selon l'une quelconque des revendications 1 à 9, **caractérisé en ce que** le soudage thermique est réalisé avec un dispositif choisi parmi une lame chauffante, une grille chauffante ou une plaque chauffante, le dispositif pouvant éventuellement être muni de picots ou de rainures.

11. Procédé selon l'une quelconque des revendications 1 à 10, **caractérisé en ce qu'**au moins un absorbeur de rayonnement électromagnétique est appliqué sur au moins une surface d'au moins une plaque de mousse thermoplastique plus mince, au moins une plaque de mousse thermoplastique plus mince sur laquelle l'absorbeur de rayonnement électromagnétique a été appliqué étant exposée à un rayonnement électromagnétique.

12. Procédé selon l'une quelconque des revendications 1 à 11, **caractérisé en ce que** le soudage thermique est réalisé à des températures de 50 à 300 °C au-dessus de la température de transition vitreuse pour les mousses thermoplastiques amorphes ou de 50 à 100 °C au-dessus de la température de fusion pour les mousses thermoplastiques partiellement cristallines.

13. Procédé selon l'une quelconque des revendications 1 à 12, **caractérisé en ce qu'**après le soudage thermique, une compression des plaques de mousse thermoplastique au moins bicouches est réalisée, la compression ayant de préférence lieu avec une pression de compression de 0,1 à 0,5 bar.

14. Procédé selon l'une quelconque des revendications 1 à 13, **caractérisé en ce que** la peau de mousse des surfaces de plaques de mousse thermoplastique plus minces qui doivent être soudées thermiquement l'une avec l'autre est tout d'abord éliminée par fraisage lors d'une première étape de procédé, les évidements structurés étant formés par fraisage lors d'une deuxième étape de procédé sur au moins une des surfaces exemptes de peau de mousse.

15. Plaque de mousse thermoplastique, qui est au moins bicouche, pouvant être fabriquée par un procédé selon l'une quelconque des revendications 1 à 13.
